# EUROPEAN PATENT SPECIFICATION

(11) **EP 0 561 084 B1**
(45) Date of publication and mention of the grant of the patent: **15.10.1997**
(21) Application number: 92400691.9
(22) Date of filing: 16.03.1992
(51) Int. Cl.: H04N 7/00

(54) **Method and apparatus for compatible encoding of high definition picture signals**
Verfahren und Einrichtung zur kompatiblen Kodierung von hoch aufgelösten Bildsignalen
Méthode et dispositif pour le codage compatible de signaux d'image haute définition

(43) Date of publication of application: 22.09.1993
(73) Proprietor: THOMSON multimedia, 92400 Courbevoie (FR)
(72) Inventor: Boie, Werner, F-67100 Strasbourg (FR)
(74) Representative: Hartnack, Wolfgang, Dipl.-Ing.

(56) References cited:
- EP-A- 0 348 186
- WO-A-87/05770
- WO-A-91/11073
- SIGNAL PROCESSING OF HDTV, II PROCEEDINGS OF THE THIRD INTERNATIONAL WORKSHOP ON HDTV 1 September 1989, TURIN, IT pages 643 - 648 FERNANDO ET AL. 'MOTION COMPENSATED DISPLAY FIELD RATE CONVERSION OF BANDWIDTH COMPRESSED HD-MAC PICTURES'

## Description

The present invention relates to a method and to an apparatus for compatible encoding of high definition picture signals.

### Background

Recent results of a motion compensated 100Hz upconversion of a reconstructed HD-MAC signal indicate that the picture quality is strongly governed by the HD-MAC artefacts which appear even highlighted by the 100Hz upconversion compared with the 50Hz pictures. Either block structured patterns are coming up or still subtitles appear severely deteriorated when the background is moving. Both current EUREKA proposals within the subgroup PG 5/6 WPU, namely the RME (receiver motion estimator) or the TME (transmitter motion estimator) algorithm exhibit these artefacts. Both algorithms have in common that they are based on an a-priori decision, that means the quality of the reconstructed 100Hz pictures will not be checked or compared with a reference. Today there is no opportunity for doing that because the processing of the motion information (motion vectors, branch decision) within the HD-MAC standard is based on a 50Hz system. WO-A-9111073 describes an encoder which performs 100Hz upconversion on the pixels to be transmitted followed by 50Hz and spatial subsampling. A further 10ms branch with the related DATV (digitally assisted TV) data is required.

### Invention

It is one object of the invention to disclose a method for enabling improved picture quality in a receiver with 100Hz upconversion. This object is reached by the inventive method disclosed in claim 1.

In principle the inventive method consists of compatible encoding of high definition picture signals, whereby a source signal is prefiltered (121, 123, 125) and downsampled (122, 124, 126) in two or more parallel branches of temporally different resolution and for each of blocks of pixel values of said downsampled source signal an output signal (17) selected (16) from one of said branches is transmitted and/or recorded together with a decision information (151) representing the actual of said branches and with motion vector information (144, 145) related to said blocks, whereby said downsampled source signal is upsampled (131, 132, 133) and interpolated (134, 135, 136) and upconverted (137, 138, 139) corresponding to said branches and is for a best match compared (15) on the basis of said blocks to the source signal upconverted (114) with studio quality, whereby spatially limited motion vectors (142, 143) are used for said upconversion (137, 138) of said interpolated source signal and said spatially limited motion vectors (144, 145) are used for said motion vector information and whereby said decision information corresponds to said best match.

Advantageous additional embodiments of the inventive method are resulting from the respective dependent claims.

It is a further object of the invention to disclose an apparatus which utilizes the inventive method. This object is reached by the inventive apparatus disclosed in independent claim 9.

In principle the inventive apparatus comprises for a source signal prefiltering means (121, 123, 125) and downsampling means (122, 124, 126) in two or more parallel branches of temporally different resolution which deliver for each of blocks of pixel values of said downsampled source signal an output signal (17) selected (16) from one of said branches, and comprises for said downsampled source signal upsampling means (131, 132, 133) and interpolation means (134, 135, 136) and upconverting means (137, 138, 139) corresponding to said branches, whereby the output signals of said upconverting means (137, 138, 139) are compared for a best match in an error processing circuit (15) on the basis of said blocks to the respectively upconverted source signal which has been upconverted in studio quality upconverting means (114), whereby in a vector processing circuit (14) from motion vectors (141) generated in said studio quality upconverting means (114) spatially limited motion vectors (142, 143) are generated and used for said upconversion (137, 138) of said interpolated source signal and whereby said spatially limited motion vectors (144, 145) are combined in a DATV encoder (18) with a decision information (151) representing the actual of said branches which corresponds to said best match.

Advantageous additional embodiments of the inventive apparatus are resulting from the respective dependent claim.

In order to overcome the unfavorable a-priori decision within the HD-MAC system for the 100 Hz upconversion it necessitates a 100 Hz reference source for the a-posteriori decision in the HD-MAC encoder. Since it is not very likely that 100 Hz pick-up devices will come up in the next future some kind of motion compensated upconversion with HDTV quality can be introduced within the HD-MAC chain. This studio quality upconversion is carried out with a high accuracy allocating to each pixel a separate motion vector or other motion information. The input of this upconverter accepts HDTV camera signals with 1250 lines, interlace or preferably progressive, 50 Hz or signals coming from an HDTV film scanner with a temporal resolution of 25 or even 50 pictures per second. The upconverter supplies signals with 1250 lines, progressive, 50 Hz for the HD-MAC preprocessing (encoding process) and a signal with 1250 lines, interlace, 100 Hz as reference source for the error processing within the HD-MAC encoder, and motion vectors allocated to the progressive 50 Hz signal.

The HD-MAC encoder contains a modified upconverter for each processing branch (20/40/80ms branch) which are needed for the error processing (a-posteriori decision). Since the error processing shall be based on a 100 Hz reference signal the 50 Hz signals regenerated according to the HD-MAC standard are motion vector adaptive upconverted to 100 Hz. For that reason the motion vectors coming from the HDTV upconverter are subjected to a vector processing which takes into account the restricted spatio-temporal resolution given in the HD-MAC system due to the block structure and the reduced temporal resolution (one vector per 40ms).

### Drawing

Preferred embodiments of the invention are described with reference to the accompanying drawing:

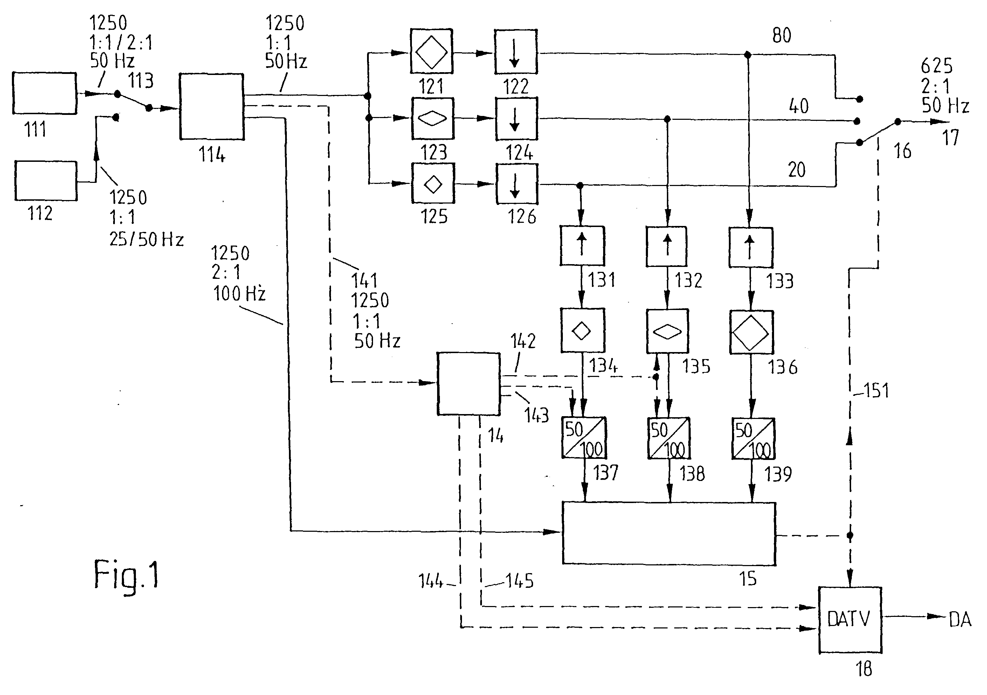

- Fig. 1: shows a block diagram of an inventive HD-MAC encoder.

### Preferred embodiments

A motion compensated upconverter 114 with HDTV quality accepts HDTV signals with 1250 lines, interlace or progressive, 50 Hz coming e.g. from an HDTV camera 111 or progressive HDTV signals with a temporal resolution of 25 or even 50 pictures per second coming e.g from an HDTV film scanner 112. The respective input source is selected with switch 113. This upconversion is carried out with a high accuracy allocating each pixel a separate motion vector or other motion information. Upconverter 114 supplies to prefilters 121, 123 and 125 HDTV signals with 1250 lines, progressive, 50 Hz for the HD-MAC preprocessing (encoding process) and to an error processing circuit 15 a signal with 1250 lines, interlace, 100 Hz as reference source for the error processing within the HD-MAC encoder and to a vector processing circuit 14 motion vectors 141 allocated to the progressive 50 Hz signal.
The output signal of prefilter 121 is passed through a downsampler 122 to a switch 16 and to an upsampler 133 and represents the 80ms branch (static picture contents, no motion compensation). The output signal of prefilter 123 is passed through a downsampler 124 to switch 16 and to an upsampler 132 and represents the 40ms branch. The output signal of prefilter 125 is passed through a downsampler 126 to switch 16 and to an upsampler 131 and represents the 20ms branch.
Switch 16 is positioned according to the decision signal 151 generated in error processing circuit 15 and delivers an D2-MAC compatible HD-MAC signal.
The output signal of upsampler 131 is passed through a postfilter 134 to a motion adaptive 50/100 Hz upconverter 137.
The output signal of upsampler 132 is passed through a postfilter 135 including the HDMAC 40ms motion compensation to a motion adaptive 50/100 Hz upconverter 138. The output signal of upsampler 133 is passed through a postfilter 136 to a 50/100 Hz upconverter 139. The three upconverters 137, 138 and 139 operate without block limits.
The 100 Hz output signals of the three upconverters 137, 138 and 139 for each processing branch (20/40/80ms) are needed for the error-related decision calculation (a-posteriori decision) in error processing circuit 15.

Since the error processing shall be based on a 100 Hz reference signal the 50 Hz signals regenerated according to the HD-MAC standard are motion vector adaptive upconverted to 100 Hz.
For that reason the motion vectors 141 coming from upconverter 114 are subjected in vector processing circuit 14 to a processing which takes into account the restricted spatiotemporal resolution given in the HD-MAC system due to the block structure and the reduced temporal resolution (one vector per 40ms). The motion vectors 141 are separated into 20ms and 40ms vectors. Spatially limited 40ms vectors 142 are fed to postfilter 135 and to upconverter 138. They are used in postfilter 135 for the known HDMAC 40ms motion compensation. Spatially limited 20ms vectors 143 are fed to upconverter 137.
The 40ms motion vectors 145 and the 20ms motion vectors 144 derived from motion vectors 141 are associated with the HDMAC pixel blocks and are spatially limited to ±16 pixels/frame in vector processing circuit 14 and fed together with decision signal 151 to a DATV (digital assisted TV) encoder 18 which outputs the DA signal for transmission.
For a better motion rendition in the 20ms mode the vector range can be increased, for instance by a factor of 2 (±32 pixels/frame), while the resolution of the vectors can be reduced by the same factor (accuracy of 2 pixels). This is possible because of the reduced horizontal resolution in the encoded video signal in the 20ms node.

In error processing circuit 15 the ideally upconverted pictures of the three branches are divided into HDMAC pixel blocks and compared with the 1250 line/2:1/100 Hz reference signal coming from upconverter 114. The best matching (e.g. by lowest energy of pixel difference block) branch block is then taken to determine the decision signal 151.

The numbers used can be adapted accordingly also to other TV systems with e.g. 60 Hz field frequency.

## Claims

1. Method for compatible encoding of high definition picture signals, whereby a source signal corresponding to these picture signals is prefiltered (121, 123, 125) and downsampled (122, 124, 126) in two or more parallel branches of temporally different resolution and for each of blocks of pixel values of said downsampled source signal an output signal (17) selected (16) from one of said branches is transmitted and/or recorded together with a decision information (151) representing the actual of said branches and with motion vector information (144, 145) related to said blocks, **characterised in that**:
- said downsampled source signal is upsampled (131, 132, 133), interpolated (134, 135, 136) and upconverted (137, 138, 139) corresponding to said branches and is for a best match compared (15) on the basis of said blocks to the source signal which has been upconverted (114) with studio quality, thereby generating motion vectors (141);
- in at least one of said branches spatially limited motion vectors (142, 143) being derived from the motion vectors (141) generated in connection with said source signal upconversion (114) are used for said branch upconversion (137);
- other spatially limited - in particular to ±16 pixels/ frame - motion vectors (144, 145) being derived from the motion vectors (141) generated in connection with said source signal upconversion (114) are used for said motion vector information;
- said decision information corresponds to said best match.

2. Method according to claim 1, **characterised** in that in at least one of said branches - in particular in a branch (40) having a medium temporal resolution - said interpolation (135) is motion adaptive, whereby for interpolation (135) and upconversion (138) the same spatially limited motion vectors (142) being derived from the motion vectors (141) generated in connection with said source signal upconversion (114) are used.

3. Method according to claim 1 or 2, **characterised** in that one of said branches (80) is used for stationary picture content.

4. Method according to claim 3, **characterised** in that said temporal resolutions correspond to 80ms, 40ms and 20ms.

5. Method according to any of claims 1 to 4, **characterised** in that said source signal is interlaced or progressive with 1250 lines and 50Hz picture frequency.

6. Method according to any of claims 1 to 4, **characterised** in that said source signal stems from a film scanner and has 1250 lines and 25Hz or 50Hz picture frequency.

7. Method according to any of claims 1 to 6, **characterised** in that a motion vector (141) is allocated to each pixel in said source signal upconversion (114).

8. Method according to any of claims 1 to 7, **characterised** in that said matching is carried out by calculating the energy of pixel difference blocks and by detecting the branch of that difference block having minimum energy.

9. Apparatus for carrying out a method for compatible encoding of high definition picture signals according to any of claims 1 to 8, comprising:
- prefiltering means (121, 123, 125) for a source signal corresponding to these picture signals and downsampling means (122, 124, 126) in two or more parallel branches of temporally different resolution which deliver for each of blocks of pixel values of said downsampled source signal an output signal (17) selected (16) from one of said branches;
- for said downsampled source signal, upsampling means (131, 132, 133), interpolation means (137, 138, 139) and upconversion means (137, 138, 139) corresponding to said branches, whereby the output signals of said upconversion means (137, 138, 139) are compared for a best match in an error processing circuit (15) on the basis of said blocks to the source signal which has been upconverted with studio quality in source signal upconversion means (114), thereby generating motion vectors (141),
and whereby in at least one of said branches spatially limited motion vectors (142, 143) being derived in a vector processing circuit (14) from the motion vectors (141) generated in said source signal upconversion means (114) are used for said branch upconversion (137);
- a DATV encoder (18) in which other spatially limited - in particular to ±16 pixels/frame - motion vectors (144, 145) being derived from the motion vectors (141) generated in said source signal upconversion means (114) are combined with a decision information corresponding to said best match.

10. Apparatus according to claim 9, **characterised** in that in at least one of said branches - in particular in a branch (40) having a medium temporal resolution - said interpolation means (135) operate motion adaptively, whereby for interpolation (135) and upconversion (138) the same spatially limited motion vectors (142) being derived from the motion vectors (141) generated in said source signal upconversion means (114) are used.

## Patentansprüche

1. Verfahren zum kompatiblen Kodieren von hochauflösenden Bildsignalen, wobei ein diesen Bildsignalen entsprechendes Quellensignal in zwei oder mehr parallelen Zweigen mit zeitlich unterschiedlicher Auflösung vorgefiltert (121, 123, 125) und abwärts abgetastet (122, 124, 126) wird, und für jeden Block von Pixelwerten des abwärts abgetasteten Quellensignals ein von einem der Zweige ausgewähltes (16) Ausgangssignal (17) zusammen mit einer Entscheidungs-Information (151), die den aktuellen Zweig darstellt, und mit einer Bewegungsvektor-Information (144, 145), die auf die Blöcke bezogen ist, ausgesendet und/oder aufgezeichnet wird, dadurch gekennzeichnet,
daß das abwärts abgetastete Quellensignal entsprechend den Zweigen aufwärts abgetastet (131, 132, 133), interpoliert (134, 135, 136) und aufwärts umgewandelt (137, 138, 139) wird und für eine beste Anpassung auf der Basis der Blöcke mit dem Quellensignal verglichen (14) wird, das mit Studioqualität aufwärts umgewandelt (114) worden ist, um dadurch Bewegungsvektoren (141) zu erzeugen;
daß in wenigstens einem der Zweige räumlich begrenzte Bewegungsvektoren (142, 143), die von den Bewegungsvektoren (141) abgeleitet werden, die in Verbindung mit der Quellensignal-Aufwärtsumwandlung (114) erzeugt werden, für die Zweig-Aufwärts-Umwandlung (137) verwendet werden;
daß andere räumlich begrenzte, - insbesondere auf ± 16 Pixel/Vollbild - Bewegungsvektoren (144, 145), die von den Bewegungsvektoren. (141) abgeleitet werden, in Verbindung mit der Quellensignal-Aufwärts-Umwandlung (114) für die Bewegungsvektor-Information verwendet werden;
daß die Entscheidungs-Information der besten Anpassung entspricht.

2. Verfahren nach Anspruch 1, dadurch gekennzeichnet, daß in wenigstens einem der Zweige - insbesondere in einem Zweig (40) mit einer mittleren zeitlichen Auflösung - die Interpolation (135) bewegungsadaptiv ist, wodurch für die Interpolation (135) und die Aufwärts-Umwandlung (138) dieselben räumlich begrenzten Bewegungsvektoren (142) verwendet werden, die von den Bewegungsvektoren (141) abgeleitet werden, die in Verbindung mit der Quellensignal-Aufwärts-Umwandlung (114) erzeugt werden.

3. Verfahren nach Anspruch 1 oder 2, dadurch gekennzeichnet, daß einer der Zweige (80) für stationären Bildinhalt verwendet wird.

4. Verfahren nach Anspruch 3, dadurch gekennzeichnet, daß die zeitlichen Auflösungen 80 ms, 40 ms und 20 ms entsprechen.

5. Verfahren nach einem der Ansprüche 1 bis 4, dadurch gekennzeichnet, daß das Quellensignal ein Zeilensprungsignal oder progressiv mit 1250 Zeilen und einer Bildfrequenz von 50 Hz ist.

6. Verfahren nach einem der Ansprüche 1 bis 4, dadurch gekennzeichnet, daß das Quellensignal von einem Filmabtaster stammt und 1250 Zeilen und eine Bildfrequenz von 25 Hz oder 50 Hz hat.

7. Verfahren nach einem der Ansprüche 1 bis 6, dadurch gekennzeichnet, daß ein Bewegungsvektor (141) jedem Pixel in der Quellensignal-Aufwärts-Umwandlung zugeordnet ist.

8. Verfahren nach einem der Ansprüche 1 bis 7, dadurch gekennzeichnet, daß die Anpassung durch Berechnung der Energie von Pixel-Differenzblöcken und durch Feststellung des Zweiges desjenigen Differenzblocks festgestellt wird, der die kleinste Energie hat.

9. Vorrichtung zur Durchführung eines Verfahrens zur kompatiblen Kodierung von hochauflösenden Bildsignalen nach einem der Ansprüche 1 bis 8 umfassend:
Vorfiltermittel (121, 123, 125) für ein Quellensignal, das diesen Bildsignalen entspricht, und Abwärts-Abtastmittel (122, 124, 126) in zwei oder mehr parallelen Zweigen mit zeitlich unterschiedlicher Auflösung, die für jeden Block von Pixelwerten des abwärts abgetasteten Quellensignals ein Ausgangssignal (17) liefern, das aus einem der Zweige ausgewählt wird (16);
für das abwärts abgetastete Quellensignal: Aufwärts-Abtastmittel (131, 132, 133), Interpolationsmittel (137, 138, 139) und Aufwärts-Umwandlungsmittel (137, 138, 139), die den Zweigen entsprechen, wobei die Ausgangssignale der Aufwärts-Umwandlungsmittel (137, 138, 139) für eine beste Anpassung in einer Fehlerverarbeitungs-Schaltung (15) auf der Basis der Blöcke mit dem Quellensignal verglichen werden, das mit Studioqualität in den Quellensignal-Aufwärts-Umwandlungsmitteln (194) aufwärts umgewandelt worden ist, um dadurch Bewegungsvektoren (141) zu erzeugen;
und wobei in wenigstens einem der Zweige räumlich begrenzte Bewegungsvektoren (142, 143), die in einer Vektorverarbeitungs-Schaltung (14) von den Bewegungsvektoren (141), die in den Quellensignal-Aufwärts-Umwandlungsmitteln (114) erzeugt werden, für die Zweig-Aufwärts-Umwandlung (137) verwendet werden;
einen DATV-Kodierer (18), in dem andere räumlich begrenzte, - insbesondere auf ± 16 Pixel/Vollbild - Bewegungsvektoren (144, 145), die von den Bewegungsvektoren (141) abgeleitet werden, die in den Quellensignal-Aufwärts-Umwandlungsmitteln (114) erzeugt werden, mit einer Entscheidungs-Information kombiniert werden, die der besten Anpassung entspricht.

10. Vorrichtung nach Anspruch 9, dadurch gekennzeichnet, daß in wenigstens einem der Zweige - insbesondere in einem Zweig (40) mit einer mittleren zeitlichen Auflösung - die Interpolationsmittel (135) bewegungsadaptiv arbeiten, wobei für die Interpolation (135) und die Aufwärts-Umwandlung (138) dieselben räumlich begrenzten Bewegungsvektoren (142) verwendet werden, die von den Bewegungsvektoren (141) abgeleitet werden, die in den Quellensignal-Aufwärts-Umwandlungsmitteln erzeugt werden.

## Revendications

1. Méthode de codage compatible de signaux d'image haute définition, par laquelle un signal source correspondant à ces signaux d'image est préfiltré (121, 123, 125) et sous-échantillonné (122, 124, 126) dans deux branches parallèles ou plus de résolutions temporellement différentes et pour chacun des blocs de valeurs d'éléments d'image dudit signal source sous-échantillonné un signal de sortie (17) sélectionné (16) à partir de l'une desdites branches est transmis et/ou enregistré avec une information de décision (151) représentant la branche effective desdites branches et avec des informations de vecteurs cinétiques (144, 145) liées auxdits blocs, caractérisée en ce que
- ledit signal source sous-échantillonné est suréchantillonné (131, 132, 133), interpolé (134, 135, 136) et converti par élévation de fréquence (137, 138, 139) conformément auxdites branches et est comparé à la recherche de la meilleure correspondance (15) au niveau desdits blocs au signal source qui a été converti par élévation de fréquence (114) avec une qualité de studio, générant ainsi des vecteurs cinétiques (141);
- dans au moins une desdites branches des vecteurs cinétiques limités spatialement (142, 143) dérivés des vecteurs cinétiques (141) générés relativement à ladite conversion par élévation de fréquence de signal source (114) sont utilisés pour ladite conversion par élévation de fréquence de branche (137);
- d'autres vecteurs cinétiques limités spatialement (144, 145) - en particulièrement à ± 16 éléments d'image/image complète - dérivés des vecteurs cinétiques (141) générés relativement à ladite conversion par élévation de fréquence de signal source (114) sont utilisés pour lesdites informations de vecteurs cinétiques;
- ladite information de décision correspond à ladite meilleure correspondance.

2. Méthode selon la revendication 1, caractérisée en ce que dans au moins une desdites branches - en particulier dans une branche (40) ayant une résolution temporelle moyenne - ladite interpolation (135) est par adaptation cinétique, par laquelle pour l'interpolation (135) et la conversion par élévation de fréquence (138) les mêmes vecteurs cinétiques limités spatialement (142) dérivés des vecteurs cinétiques (141) générés relativement à ladite conversion par élévation de fréquence de signal source (114) sont utilisés.

3. Méthode selon la revendication 1 ou 2, caractérisée en ce que l'une desdites branches (80) est utilisée pour le contenu d'image fixe.

4. Méthode selon la revendication 3, caractérisée en ce que lesdites résolutions temporelles correspondent à 80 ms, 40 ms et 20 ms.

5. Méthode selon l'une quelconque des revendications 1 à 4, caractérisée en ce que ledit signal source est entrelacé ou progressif à 1250 lignes et d'une fréquence d'image de 50 Hz.

6. Méthode selon l'une quelconque des revendications 1 à 4, caractérisée en ce que ledit signal source provient d'un appareil de télécinéma et a 1250 lignes et une fréquence d'image de 25 Hz ou de 50 Hz.

7. Méthode selon l'une quelconque des revendications 1 à 6, caractérisée en ce qu'un vecteur cinétique (141) est alloué à chaque élément d'image dans ladite conversion par élévation de fréquence de signal source (114).

8. Méthode selon l'une quelconque des revendications 1 à 7, caractérisée en ce que ladite correspondance est effectuée en calculant l'énergie de blocs de différence d'éléments d'image et en détectant la branche du bloc de différence ayant l'énergie minimum.

9. Dispositif pour exécuter une méthode de codage compatible de signaux d'image haute définition selon l'une quelconque des revendications 1 à 8, comprenant:
- un moyen de préfiltrage (121, 123, 125) d'un signal source correspondant à ces signaux d'image et un moyen de sous-échantillonnage (122, 124, 126) dans deux branches parallèles ou plus de résolutions temporelles différentes qui fournissent pour chacun des blocs de valeurs d'éléments d'image dudit signal source sous-échantillonné un signal de sortie (17) sélectionné (16) à partir de l'une desdites branches;
- pour ledit signal source sous-échantillonné, un moyen de sur-échantillonnage (131, 132, 133), un moyen d'interpolation (134, 135, 136) et un moyen de conversion par élévation de fréquence (137, 138, 139) correspondant auxdites branches, par lequel les signaux de sortie dudit moyen de conversion par élévation de fréquence (137, 138, 139) sont comparés à la recherche de la meilleure correspondance dans un circuit de traitement d'erreur (15) au niveau desdits blocs au signal source qui a été converti par élévation de fréquence à une qualité de studio dans un moyen de conversion par élévation de fréquence de signal source (114), générant ainsi des vecteurs cinétiques (141),
et par lequel dans au moins une desdites branches des vecteurs cinétiques limités spatialement (142, 143) dérivés dans un moyen de traitement vectoriel (14) des vecteurs cinétiques (141) générés dans ledit moyen de conversion par élévation de fréquence de signal source (114) sont utilisés pour ladite conversion par élévation de fréquence de branche (137);
- un codeur DATV (18) dans lequel d'autres vecteurs cinétiques limités spatialement (144, 145) - en particulièrement à ± 16 éléments d'image/image complète - dérivés des vecteurs cinétiques (141) générés dans ledit moyen de conversion par élévation de fréquence de signal source (114) sont combinés à une information de décision correspondant à ladite meilleure correspondance.

10. Dispositif selon la revendication 9, caractérisé en ce que dans au moins un desdites branches - en particulier dans une branche (40) ayant une résolution temporelle moyenne - ledit moyen d'interpolation (135) fonctionne en déplacement adaptativement, si bien que pour l'interpolation (135) et la conversion par élévation de fréquence (138) les mêmes vecteurs de déplacement limités spatialement (142) étant dérivés des vecteurs de déplacement (141) générés dans ledit moyen de conversion par élévation de fréquence de signal source (114) sont utilisés.
